## Europäisches Patentamt

## European Patent Office

## Office européen des brevets

(11) Veröffentlichungsnummer: **0 217 741**
A2

# (12) EUROPÄISCHE PATENTANMELDUNG

(21) Anmeldenummer: 86810362.3

(22) Anmeldetag: 14.08.86

(51) Int. Cl.⁴: **G 03 B 19/00**

(30) Priorität: 14.08.85 CH 3486/85

(43) Veröffentlichungstag der Anmeldung:
**08.04.87 Patentblatt 87/15**

(84) Benannte Vertragsstaaten:
**BE CH DE FR GB IT LI NL SE**

(71) Anmelder: **Vogt, Philippe**
**Frohalpstrasse 65**
**CH-8038 Zürich(CH)**

(72) Erfinder: **Vogt, Philippe**
**Frohalpstrasse 65**
**CH-8038 Zürich(CH)**

(74) Vertreter: **Häfner, Walter, Dipl.-Ing.**
**Hildanusstrasse 3**
**CH-3013 Bern(CH)**

(54) **Haltevorrichtung für einen Bild- oder Objektivrahmen einer Fachkamera.**

(57) Die Haltevorrichtung hat zum Schwenken eines Bild- oder Objektivrahmens (2) einer Fachkamera eine erste Einrichtung (6), die eine vertikale Schwenkachse (3) bestimmt, und eine zweite Einrichtung (7) mit einem Schneckengetriebe (12), deren Schneckenradachse (15) eine horizontale Schwenkachse so bestimmt, dass diese quer zu und nahe bei der Kamerabasis (1) liegt.

Diese Anordnung ergibt eine präzise Einheit mit geringen Abmessungen, maximalem Schwenkbereich und genauer Einstellbarkeit über den ganzen Schwenkbereich.

Fig.1

- 1 -

Haltevorrichtung für einen Bild- oder
Objektivrahmen einer Fachkamera
-----------------------------------------------

Die vorliegende Erfindung betrifft eine Haltevorrichtung für einen Bild- oder Objektivrahmen einer Fachkamera und zur Befestigung auf deren Basis. Die Haltevorrichtung ist in sich um mindestens zwei einander rechtwinklig kreuzende Schwenkachsen bezüglich der Kamerabasis
schwenkbar und hierfür mindestens mit einer ersten und
einer zweiten Einrichtung versehen, wobei die erste Einrichtung, die eine erste Schwenkachse so bestimmt, dass
diese vertikal durch die oder parallel der Bildebene bzw.
Hauptebene des Objektivs verläuft, und die eine Schwenkvorrichtung mit einer Betätigungseinrichtung zum Schwenken des Bild- bzw. Objektivrahmens aufweist, oberhalb
der zweiten Einrichtung angeordnet ist, die eine zweite
Schwenkachse so bestimmt, dass diese quer zur Kamerabasis
und zur ersten Schwenkachse verläuft, und die mittels einer Fokusiereinrichtung mit einer Betätigungseinrichtung
auf der Kamerabasis verstellbar montiert ist.

Derartige Kameras, mit denen zwei oder drei in verschiedener Entfernungen von der Kamera liegende Objektpunkte gleichzeitig scharf abgebildet und/oder perspektivische Verzerrungen ausgeglichen werden können, sind bekannt.

Die Verschwenkung des Bild- oder Objektivrahmens erfolgt hierbei in an sich bekannter Weise, wobei die die vertikale Schwenkachse bestimmende Einrichtung oberhalb der die horizontale Schwenkachse bestimmende Einrichtung angeordnet ist. Dieses Anordnungsprinzip wird in der Fachwelt damit begründet, dass es die sogenannte Torkelbewegung des Bild- oder Objektivrahmens vermeiden hilft. Um diese Torkelbewegung zu vermeiden, muss in bekannter Weise zuerst die Schwenkung um die horizontale Schwenkachse und dann die Schwenkung um die vertikale Schwenkachse vorgenommen werden.

Bei den bekannten Ausführungsformen der Fachkamera ist der Bild- oder Objektivträger über einen Halter mit der Kamerabasis so verbunden, dass dieser auf der Kamerabasis lediglich verschiebbar ist, oder dass dieser bezüglich der Kamerabasis zusätzlich geschwenkt werden kann. Diese Verschwenkung erfolgt nur dann, wenn der Schwenkbereich der oberhalb dafür vorgesehenen Einrichtung nicht ausreicht, und um lediglich die ungefähre Neigung des Bild- und Objektivträgers einzustellen.

Die der Erfindung zugrundeliegende Aufgabe besteht darin, eine Vorrichtung der eingangs genannten Art zu schaffen, deren Schwenkbereich nicht eingeschränkt, und die über den gesamten Schwenkbereich leicht und ge-

**0217741**

nau einstellbar ist.

Diese Aufgabe wird erfindungsgemäss mit den kennzeichnenden Merkmalen des Patentanspruches 1 gelöst.

Der Vorteil der Erfindung ist im wesentlichen darin zu sehen, dass die Haltevorrichtung eine präzise Einheit mit kleinen Abmessungen bildet.

Im folgenden wird die Erfindung anhand der beiliegenden Zeichnungen erläutert.

Es zeigen:

Fig. 1 eine teilweise aufgebrochen dargestellte Ansicht eines Ausführungsbeispiels einer erfindungsgemässen Haltevorrichtung,

Fig. 2 eine Ansicht in Richtung "A" in Fig. 1,

Fig. 3 einen Schnitt durch die erste Einrichtung, und

Fig. 4 einen Schnitt durch eine Betätigungseinrichtung.

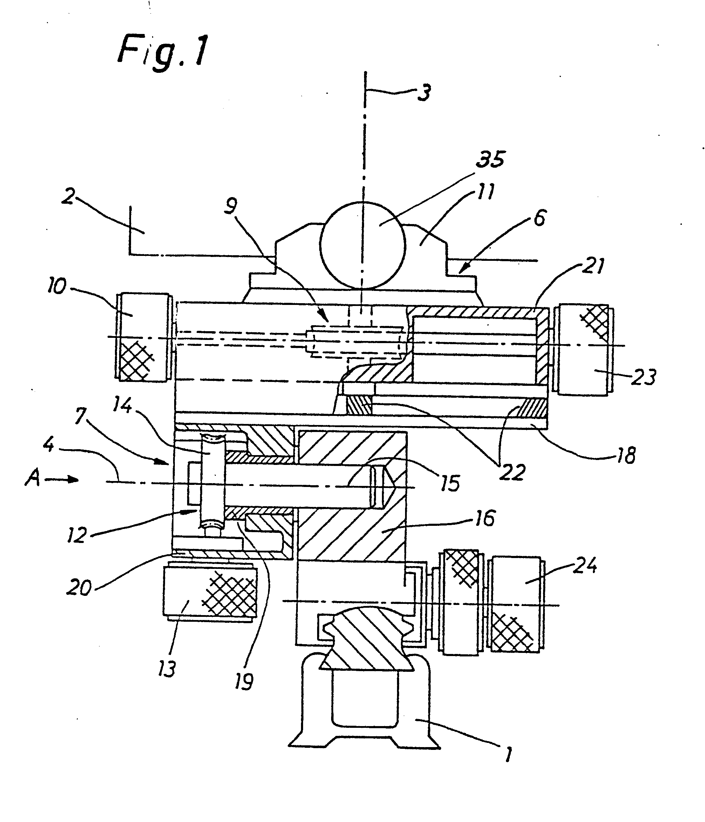

Die Figur 1 zeigt als Ausführungsbeispiel eine Haltevorrichtung, die auf einer Kamerabasis 1 verstellbar montiert ist, und an der oben der Bild- bzw. Objektivrahmen 2 lösbar befestigt ist. Mit der Haltevorrichtung gemäss Fig. 1 ist der Bild- bzw. Objektivrahmen 2 durch die an sich bekannte Basisschwenkung um zwei einander rechtwinklig kreuzende Schwenkachsen 3, 4 bezüglich der Kamerabasis 1 schwenkbar, wobei die erste Schwenkachse 3 durch die oder nahe parallel der Bildebene bzw. Hauptebene des Objektivs verläuft und die zweite Schwenkachse 4 nahe der Kamerabasis 1 quer zu dieser und zur ersten Schwenkachse 3 verläuft.

Die in Fig. 1 dargestellte Haltevorrichtung enthält eine erste Einrichtung 6, die die erste Schwenkachse 3 bestimmt, und eine zweite Einrichtung 7, die die zweite Schwenkachse 4 bestimmt. Die erste Einrichtung 6 ist oberhalb der zweiten Einrichtung 7 montiert.

Die erste Einrichtung 6 weist ein Schneckengetriebe 9 mit einer Betätigungseinrichtung 10, einen Halter 11 für den Bild- bzw. Objektivrahmen 2 und eine Rastkupplung auf, die zwischen Halter und Schneckengetriebe angeordnet ist, um das auf die Schnecke einwirkende Drehmoment zu begrenzen.

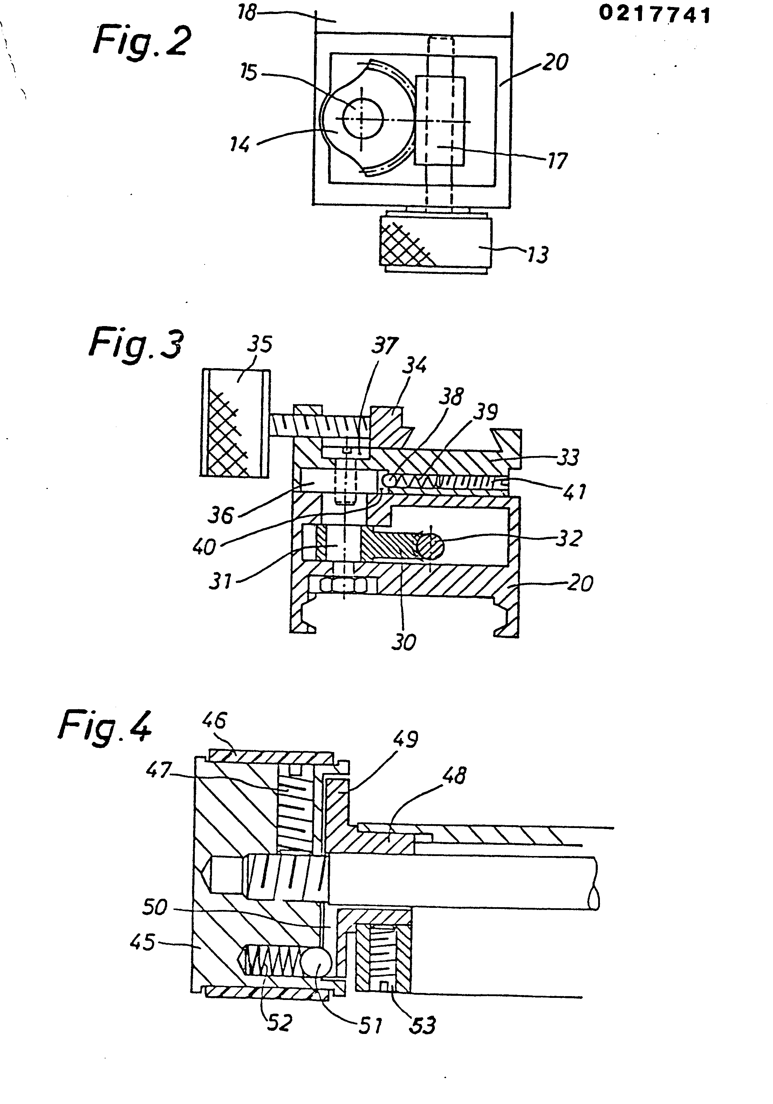

Die zweite Einrichtung 7 enthält ein Schneckengetriebe 12 mit einer Betätigungseinrichtung 13. Das Schneckenrad 14 des Schneckengetriebes ist drehfest auf einer Schneckenradachse 15 montiert, die die zweite Schwenkachse 4 bestimmt und drehfest in einem auf der Kamerabasis 1 verschiebbaren Unterteil 16 montiert ist. Die Schnecke 17 ist in einem Oberteil 18 drehbar montiert und mit der Betätigungseinrichtung 13 verbunden (Fig. 2). Der Oberteil 18 ist mittels eines Lagers 19 auf der Schneckenradachse 15 drehbar gelagert. Der Oberteil 18 enthält ein Gehäuse 20, das das Schneckengetriebe 12 umschliesst und auf der Schneckenradachse 15 drehbar gelagert ist, und eine Verstellungseinrichtung 21, die einen Feintrieb 22 mit Betätigungseinrichtung 23 aufweist, um den Bild- bzw. Objektivrahmen 2 quer bezüglich der Kamerabasis 1 zu verstellen, und in der die erste Einrichtung 6 montiert ist. Der Unterteil 16 ist mit einer Fokusiereinrichtung 24 versehen, um die Haltevorrichtung in Längsrichtung der Kamerabasis 1 zu verschieben.

Die Haltevorrichtung kann ferner eine zweite Ver-stelleinrichtung mit einer Betätigungseinrichtung enthal-ten, die zwischen dem Bild- bzw. Objektivrahmen 2 und dem Halter 11 angeordnet ist, um den Bild- bzw. Objektivrahmen 2 vertikal bezüglich der Kamerabasis 1 zu verstellen.

Die Figur 3 zeigt einen Schnitt durch die in der ersten Verstelleinrichtung 21 montierte erste Einrichtung 6. Wie bereits erwähnt, enthält die erste Einrichtung 6 ein Schneckengetriebe, dessen Schneckenrad 30 auf einer Schneckenradachse 31 drehfest montiert ist, und dessen Schnecke 32 mit der Betätigungseinrichtung 10 verbunden ist. Das Schneckenrad 30 und die Schnecke 32 sind in der esten Verstelleinrichtung gelagert. Der Halter 11 enthält eine Platte 33, die auf der Schneckenradachse 31 montiert ist, einen Klemmteil 34 mit einer Schraube 35 zum Festklemmen des Bild- bzw. Objektivrahmens 2 oder einer dritten Einrichtung zu dessen Schwenken um seine horizontale Mittelachse. Die Schneckenradachse 31 hat einen Bund 36, auf dem die Platte 33 angeordnet ist. Die Platte 33 ist mittels einer Schraube 37 an der Schneckenradachse 31 befestigt. Wie bereits erwähnt, enthält die erste Einrichtung 6 eine Rastkupplung. Wie Figur 3 zeigt, umfasst die Rastkupplung eine Kugel 38, eine Feder 39, die die Kugel in eine V-förmige Ausnehmung 40 im Bund 36 der Schneckenradachse 31 drückt, und eine Schraube 41, mit der die auf die Kugel 38 einwirkende Druckkraft einstellbar ist.

Aus der vorstehenden Beschreibung geht hervor, dass die Haltevorrichtung mehrere Betätigungseinrichtungen aufweist, die sich in zwei Gruppen unterteilen lassen, und zwar eine erste Gruppe mindestens mit den Betätigungseinrichtungen 23 und 24, die eine Verschiebung, d.h. eine Querverschiebung und eine Fokusierung bewirken, und in eine zweite Gruppe mindestens mit den Betätigungseinrichtungen 10 un 13, die eine Schwenkung bewirken. Wie aus der Figur 1 ersichtlich ist, ist die Haltevorrichtung so ausgebildet, dass die Betätigungseinrichtungen der ersten Gruppe bezüglich der Kamerabasis 1 auf der einen Seite und die Betätigungseinrichtungen der zweiten Gruppe auf der anderen Seite der Kamerabasis 1 liegen. Mit dieser Anordnung wird das Einstellen an einer Fachkamera vereinfacht.

Um das Einstellen weiter zu vereinfachen, können die Betätigungseinrichtungen 10 und 13 der zweiten Gruppe mit einer Rasteinrichtung versehen sein. Die Figur 4 zeigt eine derartige Betätigungseinrichtung. Die Betätigungseinrichtung enthält einen Drehknopf 45, der mit einem Griffbelag 46 am Umfang versehen ist. Der Drehknopf 45 ist mit der Schneckenwelle 17 oder 32 verschraubt und durch eine Stiftschraube 47 gesichert. Die Rasteinrichtung besteht aus einer Buchse 48 mit einem Flansch 49, der an der Oberseite eine Ausnehmung 50 aufweist, einer Kugel 51, die im Drehknopf 45 beweglich angeordnet ist, und einer Druckfeder 52, die im Drehknopf 45 angeordnet ist und die Kugel 51 gegen den Flansch 49 drückt. Die Buchse 48 ist jeweils durch eine Stiftschraube 53 gehalten. Bei der Drehung der Betätigungseinrichtung wird somit einmal pro Umdrehung die Kugel 51 durch die Feder 52 in die Ausnehmung 50 gedrückt. Bei entsprechender Ausstattung der jeweils betätigten Einrichtung wird durch diese Rasteinrichtung bei jedem Einrasten der Kugel 51 in die Ausnehmung 50 eine Information über den Winkel abgegeben, um den die betreffende Einrichtung verschwenkt worden ist.

Anstelle der Betätigungseinrichtungen oder zusätzlich hierzu können auch Antriebsmotore vorgesehen werden, die von einer elektrischen Einrichtung gesteuert werden.

P a t e n t a n s p r ü c h e
------------------------------

1. Haltevorrichtung für einen Bild- oder Objektivrahmen einer Fachkamera und zur Befestigung auf deren Basis, in sich um mindestens zwei einander rechtwinklig kreuzende Schwenkachsen bezüglich der Kamerabasis schwenkbar und hierfür mindestens mit einer ersten und einer zweiten Einrichtung versehen, wobei die erste Einrichtung, die eine erste Schwenkachse so bestimmt, dass diese vertikal durch die oder parallel der Bildebene oder Hauptebene des Objektivs verläuft, und die eine Schwenkvorrichtung mit einer Betätigungseinrichtung zum Schwenken des Bild- oder Objektivrahmens aufweist, oberhalb der zweiten Einrichtung angeordnet ist, die eine zweite Schwenkachse so bestimmt, dass diese quer zur Kamerabasis und zur ersten Schwenkachse verläuft, und die mittels einer Fokusiereinrichtung mit einer Betätigungseinrichtung auf der Kamerabasis verstellbar montiert ist, dadurch gekennzeichnet, dass die zweite Einrichtung (7) so angeordnet ist, dass die zweite Schwenkachse (4) nahe bei der Kamerabasis (1) und rechtwinklig zu dieser liegt, und dass die zweite Einrichtung (7) ein Schneckengetriebe (12) mit einer Betätigungseinrichtung (13) aufweist, wobei die Schneckenradachse (15) die zweite Schwenkachse (4) bestimmt und drehfest in einem auf der Kamerabasis (1) verschiebbaren Unterteil (16) montiert ist, und dass die Schnecke (17) in einem Oberteil (18,20) montiert ist, der auf der Schneckenradachse (15) drehbar angeordnet ist, und der die erste Einrichtung (6) enthält.

2. Vorrichtung nach Anspruch 1, dadurch gekennzeichnet, dass die erste Einrichtung (6) ferner einen Halter (11), in dem der Bild- oder Objektivrahmen (2) einsetzbar und festklemmbar ist, und eine Rastkupplung aufweist, um das bei der Schwenkung auf die erste Einrichtung einwirkende Drehmoment zu begrenzen.

3. Vorrichtung nach Anspruch 2, dadurch gekennzeichnet, dass die Schwenkvorrichtung der ersten Einrichtung als Schnekkengetriebe (30-32) ausgebildet ist, und dass die Rastkupplung (38-41) eine federbelastete Kugel (38) aufweist, die mit einem in der Schneckenradachse (31) ausgebildeten Einschnitt (40) in Eingriff steht.

4. Vorrichtung nach Anspruch 1, dadurch gekennzeichnet, dass der Unterteil (16) mit der Fokusiereinrichtung (24) versehen ist, um den Bild- oder Objektivrahmen (2) in Längsrichtung der Kamerabasis (1) zu verschieben.

5. Vorrichtung nach Anspruch 1, dadurch gekennzeichnet, dass die Schnecke (17) im Oberteil (18) drehbar angeordnet ist, und dass die Schnecke (17) mit der Betätigungseinrichtung (13) verbunden ist.

6. Vorrichtung nach Anspruch 1 mit einer ersten Verstelleinrichtung (21), die einen Feintrieb (22) mit Betätigungseinrichtung (23) aufweist, um den Bild- oder Objektivrahmen (2) quer bezüglich der Kamerabasis (1) zu verstellen, dadurch gekennzeichnet, dass die erste Einrichtung (6) in der ersten Verstelleinrichtung (21) montiert ist, und dass die erste Verstelleinrichtung (21) am Oberteil (18) befestigt ist.

7. Vorrichtung nach Anspruch 1 mit einer zweiten Verstelleinrichtung, die einen Feintrieb mit Betätigungseinrichtung aufweist, um den Bild- oder Objektivrahmen vertikal bezüglich der Kamerabasis zu verstellen, dadurch gekennzeichnet, dass die zweite Verstelleinrichtung zwischen dem Unterteil (16) und der Fokusiereinrichtung (24) angeordnet ist.

8. Vorrichtung nach einem der Ansprüche 1 oder 5, dadurch gekennzeichnet, dass die Betätigungseinrichtungen (10,13) einen Drehknopf (45) und eine Rasteinrichtung (40-52)

0217741

aufweisen, die dem Drehknopf zugeordnet ist, um eine Information bezüglich des Winkels abzugeben, um welchen die betreffende Einrichtung verschwenkt worden ist.

9. Vorrichtung nach einem der Ansprüche 1, 5, 6 oder 7, dadurch gekennzeichnet, dass die eine Schwenkung bewirkenden Betätigungseinrichtungen (10,13) und die eine Verschiebung bewirkenden Betätigungseinrichtungen (23,24) auf verschiedenen Seiten einer vertikalen, längs der Kamerabasis (1) verlaufenden Ebene angeordnet sind.

10. Vorrichtung nach einem der Ansprüche 1, 5, 6 oder 7, dadurch gekennzeichnet, dass mindestens eine der Betätigungseinrichtungen (10, 13; 23, 24) eine Servoeinrichtung mit Betätigung durch eine elektrische Einrichtung ist oder durch eine solche ergänzt ist.

Fig.1

Fig.2

Fig.3

Fig.4